**Europäisches Patentamt**

**European Patent Office**

**Office européen des brevets**

(19)

(11) Veröffentlichungsnummer: **0 158 627**
**A2**

(12) # EUROPÄISCHE PATENTANMELDUNG

(21) Anmeldenummer: 85890071.5

(22) Anmeldetag: 21.03.85

(51) Int. Cl.⁴: **C 22 B 7/00**
**C 22 B 19/30, H 01 M 6/52**

(30) Priorität: 10.04.84 AT 1202/84

(43) Veröffentlichungstag der Anmeldung:
16.10.85 Patentblatt 85/42

(84) Benannte Vertragsstaaten:
DE FR GB IT SE

(71) Anmelder: VOEST-ALPINE Aktiengesellschaft
Muldenstrasse 5
A-4020 Linz(AT)

(72) Erfinder: Hubweber, Gerhard, Dr. Dipl.-Ing.
Feldweg 6
A-4890 Frankenmarkt(AT)

(72) Erfinder: Tasch, Franz, Dipl.-Ing.

A-8983 Bad Mitterndorf 151(AT)

(72) Erfinder: Kroitzsch, Ernst, Dr. Dipl.-Ing.
Wolfsgartenweg 13
A-5020 Salzburg(AT)

(72) Erfinder: Hans, Walter,
Burggasse 12
A-8652 Kindberg(AT)

(72) Erfinder: Reiterer, Hans Detlef, Dr.
Sandgasse 47
A-8010 Graz(AT)

(74) Vertreter: Wolfram, Gustav, Dipl.-Ing.
Schwindgasse 7 P.O. Box 205
A-1041 Wien(AT)

(54) Verfahren zur Rückgewinnung von Zink und Mangan aus Zink und Manganoxide enthaltendem Schrott von entladenen Zink-Kohle-Manganoxidbatterien.

(57) Bei diesem Verfahren wird Zink und Manganoxide enthaltender Batterieschrott gemeinsam mit kohlenstoffhältigem Material erhitzt.

Um die wirtschaftliche und praxisgerechte Trennung der Inhaltsstoffe gebrauchter Zink-Kohle-Manganoxid-Trockenzellen voneinander und die Wiedergewinnung des Metallgehaltes in Form möglichst reiner und direkt weiter verwertbarer Metalle oder Legierungen zu ermöglichen, wird der Schrott - gegebenenfalls nach vorheriger Auslaugung - mit festen kohlenstoffhältigen Reduktionsmitteln und Eisenträgern als Zuschlagstoffen in einem Reduktionsgefäß eingeschmolzen, die in den dabei entstehenden Reaktionsgasen enthaltenen Zink-Verbindungen und/oder metallisches Zink sowie gegebenenfalls Ammoniumchlorid werden unter Abkühlung der Gase gesammelt und Mangan wird als zinkfreies Ferromangan gewonnen.

EP 0 158 627 A2

Verfahren zur Rückgewinnung von Zink und Mangan aus
Zink und Manganoxide enthaltendem Schrott von entladenen Zink-Kohle-Manganoxidbatterien

Die Erfindung betrifft ein Verfahren zur Rückgewinnung von Zink und Mangan aus Zink und Manganoxide enthaltendem Schrott von entladenen Zink-Kohle-Manganoxidbatterien, wobei der Batterieschrott gemeinsam mit kohlenstoffhältigem Material erhitzt wird.

Bei der Sammlung von verbrauchten galvanischen Elementen fallen neben verschiedensten Sorten sogenannter Knopfbatterien, welche zum Teil silberhaltig sind, auch Taschenbatterien vom Typ des Leclanché-Elementes in großer Menge an. Solche Elemente sind zum weitaus überwiegenden Teil in Form von Stabbatterien im Handel, welche im wesentlichen aus einem Zinkzylinder als Minuspol bestehen, an den sich eine poröse Zwischenschicht anschließt, gefolgt von einem immobilisierten, meist $NH_4Cl$- und $ZnCl_2$-haltigen Elektrolyt. Im Zentrum befindet sich als Pluspol ein Kohlestab mit Braunstein als Depolarisator. Diese Zink-Kohle-Batterien wurden bei der Aufarbeitung von Altbatterien bisher ausgesondert und gelangten in Mülldeponien. Auf diese Weise gehen wertvolle Rohstoffe ungenützt verloren und darüber hinaus tragen die Inhaltsstoffe dieser Batterien in erheblichem Ausmaß zur Umweltbelastung bei, zumal die Zinkelektroden in vielen Fällen auch noch innenseitig amalgamiert sind.

Es sind Verfahren zur Rückgewinnung von Metallen aus Schrott von Nickel-Cadmium-Speicherbatterien bekannt geworden. So betrifft die EP-A- 0 075 978 ein Verfahren zur Aufarbeitung von Ni, Cd und organische Bestandteile enthaltendem Schrott, bei dem die organischen Bestandteile durch Pyrolyse in einer Inertgas-Sauerstoff-Atmosphäre entfernt werden, sodann das Cadmium abdestilliert und kondensiert wird und als Rückstand eine Mischung von Nickel- und Eisenschrott erhalten wird.

Nach der DE-B- 1 583 874 wird Ni-Cd-Schrott mit Kohlenstoffträgern eingeschmolzen, wobei das Cadmium verdampft, anschließend zu CdO oxidiert und aufgefangen wird und das Nickel mit dem vorhandenen Eisen als Ferronickellegierung anfällt.

In der FR-A - 1 061 410 ist ein Verfahren und eine Apparatur zur thermischen Rückgewinnung der Bestandteile von Trockenzellen beschrieben. Dabei werden die Zellen, so wie sie sind, in einem außenbeheizten Raum (Drehofen) eingebracht, wo sie unter Agitieren auf eine Temperatur von mindestens 800$^{o}$ C erhitzt und mit einem Adjuvans zur weitestgehenden Entfernung des in den Verbindungen enthaltenen Chlors - insbesondere mit Wasserdampf - versetzt werden. Kohlenstifte, Kupfer- und Messingstücke werden durch Sieben von einem bei der thermischen Behandlung erhaltenen pulverförmigen, durch Oxidationsvorgänge entstandenen, Mangan- und Zinkverbindungen enthaltenden Produkt abgetrennt. Aus den gasförmigen Reaktionsprodukten werden Stäube abgeschieden, in denen noch nennenswerte Anteile von Zn- und Mn-Verbindungen enthalten sind. Die Stäube können brikettiert und wieder in den Drehofen chargiert werden. Die chlorierten Produkte in den Abgasen werden vor dem Entweichen der Gase in die Atmosphäre in einem Reiniger abgeschieden.

Aus der FR-A- 1 112 969 ist gleichfalls ein Verfahren und eine Vorrichtung zur Rückgewinnung der metallischen Komponenten aus gebrauchten Trockenbatterien bekannt, wobei die Batterien im Verlauf einer Vorverkohlung zerstört und die enthaltenen chlorierten Verbindungen teilweise zersetzt werden. Die Metallkomponenten der unverbrannten Anteile werden mit kohlenstoffhältigen Materialien vermischt und agglomeriert. Die Agglomerate werden sodann einer Reduktionsbehandlung und schließlich einer Oxidationsbehandlung unterworfen, wobei eine Manganverbindung und ZnO resultieren. ZnO wird aus den Verbrennungsgasen der Oxidationsbehandlung abgeschieden. Die nach der Vorverkohlung noch verbliebenen chlorierten Verbindungen werden während der Reduktionsbehandlung zerstört und als

- 3 -

0158627

gasförmige Produkte abgeführt.

Nach den beiden letztgenannten Dokumenten werden somit ausschließlich oxidische Mn- und Zn-Verbindungen erhalten, welche erst weiter aufgearbeitet werden müssen.

Die Erfindung stellt sich die Aufgabe, die Nachteile der bekannten Aufarbeitungsmethoden zu überwinden und ein wirtschaftliches, praxisgerechtes Verfahren zu schaffen, mit dem die Inhaltsstoffe gebrauchter Zink-Kohle-Manganoxid-Trockenzellen voneinander getrennt und der Metallgehalt in Form möglichst reiner und direkt weiter verwertbarer Metalle oder Legierungen wiedergewonnen werden kann.

Diese Aufgabe wird bei einem Verfahren der eingangs definierten Art erfindungsgemäß dadurch gelöst, daß der Schrott - gegebenenfalls nach vorheriger Auslaugung - mit festen kohlenstoffhältigen Reduktionsmitteln und Eisenträgern als Zuschlagstoffen in einem Reduktionsgefäß eingeschmolzen wird, die in den dabei entstehenden Reaktionsgasen enthaltenen Zinkverbindungen und/oder metallisches Zink sowie gegebenenfalls Ammoniumchlorid unter Abkühlung der Gase gesammelt werden und Mangan als zinkfreies Ferromangan gewonnen wird.

Zweckmäßig wird der Schrott vor der Laugung bzw. vor dem reduzierenden Einschmelzen zur Entfernung gegebenenfalls darin enthaltenen Quecksilbers auf Temperaturen bis 600$^o$ C erhitzt.

Diese Wärmebehandlung des Schrotts muß selbstverständlich in einem hermetisch verschlossenen Gefäß vorgenommen werden. Das dabei abdampfende Quecksilber - der Quecksilbergehalt der zerkleinerten Batterien kann bis zu 3 Massen% betragen - wird in einem Kondensationsgefäß in flüssiger Form aufgefangen.

Eine Reduktion mit kohlenstoffhältigen Reduktionsmitteln allein ist nicht möglich, da in diesem Fall Mangancarbide gebildet würden. Deswegen müssen dem Batterie-Schrott auch Eisenträger, wie Eisenschrott oder Roheisen zugegeben werden. Bei der Dosierung der Reduktionsmittel ist es auch notwendig, den Gehalt des Batterieschrotts an Kohle und organischen Substanzen zu berücksichtigen. Mit dem Schrott von Stahlmantelbatterien gelangt überdies bereits ein gewisser Eisenanteil in die zu reduzierende Mischung.

Das Einsatzmaterial kann zweckmäßig in einen Elektroniederschachtofen chargiert werden, welcher als Lichtbogenofen, insbesondere aber als Widerstandsofen, betrieben wird. Es kommen jedoch auch andere Reduktionsgefäße in Frage, in welchen die für den Ablauf des Reduktionsvorganges notwendigen Temperaturen von ca. 1400 bis ca. $1600^{\circ}$ C erreicht werden können. Bei der Chargierung muß streng darauf geachtet werden, daß sich keine Säule aus dem Einsatzmaterial aufbaut, d.h. die Zugabe muß genau mit der Einschmelzgeschwindigkeit des Einsatzmaterials abgestimmt sein, um das Entweichen der flüchtigen Bestandteile - vor allem von Zink - nicht zu behindern.

Nach einer Ausführungsform des erfindungsgemäßen Verfahrens wird der Schrott mit einem schwach sauren wässerigen Medium eines pH-Wertes von 4 bis 5,5 - vorteilhaft bei einem pH-Wert von etwa 5,4 - ausgelaugt, um Ammoniumchlorid und Zinkchlorid zu lösen, worauf die Laugungslösung vom verbleibenden, Manganoxide und metallisches Zink enthaltenden Rückstand abgetrennt und zur Abscheidung des Zinks elektrolysiert wird.

Die Auslaugung kann zunächst mit Wasser vorgenommen werden, wodurch $NH_4Cl$ und teilweise bereits $ZnCl_2$ gelöst wird. Durch allmählichen Zusatz einer starken Säure, beispielsweise Schwefelsäure oder Salzsäure, erfolgt vollständige Lösung des Zinkchlorides.

Manganoxide, metallisches Zink sowie Kohle-verbleiben als ungelöster Rückstand und werden nach Mischung mit Eisenträgern und Reduktionsmitteln zur Reduktion eingesetzt.

Gemäß einer weiteren Ausführungsform des erfindungsgemäßen Verfahrens wird der Schrott mit einem alkalischen Medium eines pH-Wertes zwischen 7,8 und 9 - vorzugsweise unter Einhaltung eines pH-Wertes von etwa 8 - ausgelaugt, um Elektrolytsalze, wie Ammoniumchlorid, zu entfernen, worauf die Lösung vom Schlamm, der Zinkhydroxid und Manganoxide enthält, abgetrennt, der Schlamm getrocknet und reduzierend eingeschmolzen wird.

Die Auslaugung kann in jedem Fall auch mehrstufig durchgeführt werden, um vorhandenes $NH_4Cl$ restlos zu lösen.

Sowohl der bei der sauren Laugung als auch der bei der alkalischen Laugung erhaltene Rückstand bzw. Schlamm kann nach Trocknung brikettiert werden, um die Chargierung in das Reaktionsgefäß zu erleichtern und das Einschmelzverhalten des Einsatzmaterials zu verbessern.

Dem Schrott können feinteilige kohlenstoffhältige Reduktionsmittel bereits in der Laugungsstufe zugesetzt werden. So kann Kohlen- und/oder Koksgrus in das Laugungsmedium eingebracht werden, wodurch ein besserer Kontakt der einzelnen Komponenten und eine homogenere Vermischung des Einsatzmaterials erzielt wird.

Die Auslaugung wird im allgemeinen bei etwa Raumtemperatur vorgenommen.

Im Reduktionsgefäß wird gegebenenfalls vorhandenes Zinkhydroxid zu Zinkoxid calciniert und letzteres weiter zu metallischem Zink reduziert. Das entstandene Zink verdampft bei der hohen Temperatur gemeinsam mit dem Teil des Zinks, welcher im Einsatzmaterial bereits in metallischer Form vorlag. Wurde der eingesetzte Schrott keinem Auslaugungsprozeß unterworfen, verdampft auch $NH_4Cl$ und $ZnCl_2$ im Reduktionsgefäß.

Die von den Reaktionsgasen dampfförmig mitgeführten Verbindungen werden bei Abkühlung der Gase unter etwa 300°C als Feststoffe gesammelt. Ihre Abscheidung kann beispielsweise mittels eines Staubfilters erfolgen.

Wird bei der Reaktionsgasableitung kein Wert auf die Aufrechterhaltung einer reduzierenden Atmosphäre gelegt, fällt das Zink bei der Gasentstaubung größtenteils als Zinkoxid an.

Nach der bereits erwähnten Ausführungsform des Verfahrens ohne vorherige Auslaugung des Schrottes wird der Schrott mit den Zuschlagstoffen direkt reduzierend eingeschmolzen und das gemeinsam mit dem metallischen Zink und/oder den Zinkverbindungen gesammelte Ammoniumchlorid wird aus diesem Gemisch absublimiert ($NH_4Cl$ beginnt unter Atmosphärendurck bei 338°C zu sublimieren).

Vorteilhaft werden das aus der Gasphase gesammelte metallische Zink und/oder die Zinkverbindungen in saurem Milieu aufgelöst und das Zink wird aus der Lösung elektrolytisch abgeschieden.

Vorzugsweise wird wenigstens ein Teil der nach Auflösung des gesammelten Zinks bzw. der Zinkverbindungen in saurem Milieu und nach Elektrolyse dieser Lösung verbleibenden sauren zinkarmen Flüssigkeit wieder zur Auflösung des metallischen Zinks und/oder der Zinkverbindungen rückgeführt. Auf diese Weise fällt kein oder nur eine geringe Menge an Abwasser an.

Die Zn-Elektrolyse kann zweckmäßig bei einer Badtemperatur von etwa 25 bis 30°C in üblichen Elektrolysezellen durchgeführt werden. Gelangt ein Elektrolysebad zum Einsatz, welches überwiegend Zinkchlorid enthält, kann der optimale pH-Wert vorteilhaft mittels gepufferter Salzsäure eingestellt werden. Als Elektrodenmaterial für die Kathoden wird insbesondere Zink verwendet, aber auch beispielsweise Aluminium oder Stahl kommen dafür in Frage. Die unlöslichen Anoden können z.B. aus Blei, Hartblei, Graphit oder Titan gefertigt sein.

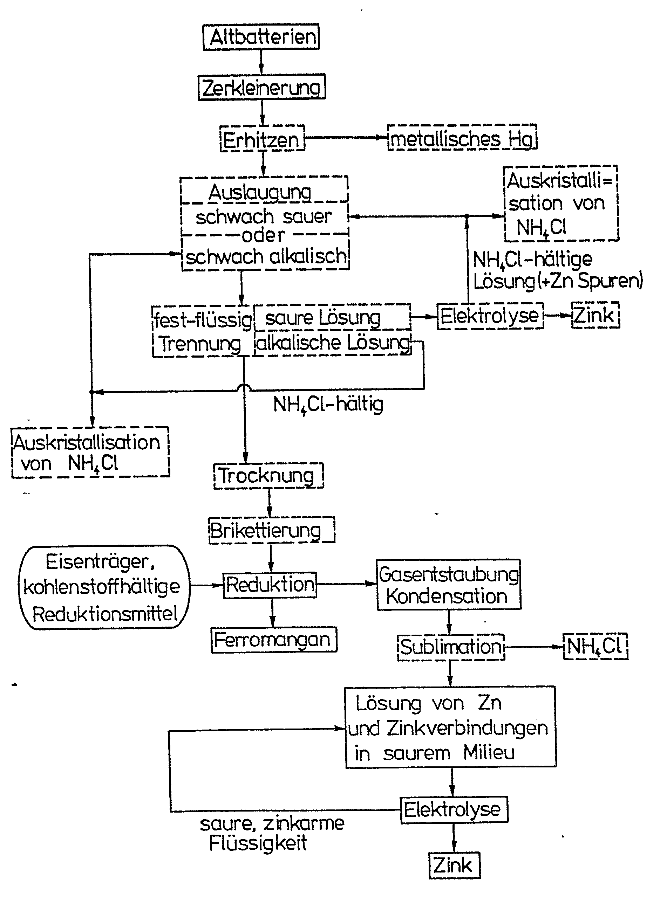

Die Erfindung wird anhand des in der Zeichnung dargestellten Flußdiagrammes noch näher erläutert, in welchem die mit voll ausgezogenen Linien umrahmten Verfahrensschritte und Produkte allen Ausführungsformen des Verfahrens gemeinsam sind, während die strichliert umrahmten fakultative Maßnahmen und dabei resultierende Produkte vorstellen.

Die Zink-Kohle-Manganoxidbatterien werden zunächst mechanisch zerkleinert. Wird bei der Analyse des Schrotts ein Quecksilbergehalt festgetellt, wird der Schrott einer Hitzebehandlung zur Abtrennung des Quecksilbers in der beschriebenen Weise unterworfen.

Daran schließt sich entweder die Auslaugung oder direkt das reduzierende Einschmelzen mit den Zuschlagstoffen. Wird mit einem schwach sauren wässerigen Medium gelaugt, so wird die nach fest-flüssig-Trennung erhaltene, Zinkionen und Ammoniumchlorid enthaltende Lösung einer Elektrolyse zur Reingewinnung des Zinks unterworfen. Die an Zink abgemagerte Lösung wird wieder zur Auslaugung des Batterieschrotts rückgeführt. Diese Kreislaufführung der sauren Laugungsflüssigkeit kann so lange fortgesetzt werden, bis die Konzentration des $NH_4Cl$ einen bestimmten Wert erreicht, worauf das $NH_4Cl$ beispielsweise in kristalliner Form durch Abkühlen oder Einengen der konzentrierten Lösung gewonnen wird.

Auch die nach Abtrennung des Schlammes bei der Auslaugung mit einem alkalischen Medium erhaltene $NH_4Cl$-hältige Lösung kann so lange zur Laugungsstufe rückgeführt werden, bis der Anreicherungsgrad an $NH_4Cl$ zu groß wird. Die Abscheidung des Ammoniumchlorides kann wie bei der sauren Laugung beschrieben vorgenommen werden.

In beiden Fällen können die vom Großteil des $NH_4Cl$ befreiten Lösungen - gegebenenfalls nach Einstellung des pH-Wertes - wieder den für die Auslaugung des Schrottes eingesetzten Medien zugesetzt werden.

Das im Reduktionsgefäß anfallende Ferromangan wird abgezogen und kann beispielsweise zur Stahlerzeugung unmittelbar weiterverwendet werden.

Wurde ohne vorherige Auslaugung des Schrottes reduzierend eingeschmolzen, so werden in den Reaktionsgasen auch Ammoniumchlorid und Zinkchlorid mitgeführt, welche Verbindungen bei der Gasentstaubung bzw. Kondensation der Feststoffe gemeinsam mit Zink und/oder Zinkoxid anfallen. Da $NH_4Cl$ bei Atmosphärendruck bereits ab 338°C zu sublimieren beginnt, wird es vor Lösung der Feststoffe in einem weiteren Schritt durch Erhitzen der aus der Gasphase abgeschiedenen Feststoffe vorteilhaft abgetrennt.

Die aus den Reaktionsgasen gesammelten Zinkverbindungen und/oder das metallische Zink werden sodann in saurem Milieu gelöst und aus der erhaltenen, beispielsweise salz-oder schwefelsauren Lösung, wird Zink elektrolytisch in reiner Form gewonnen. Die verbleibende saure, zinkarme Flüssigkeit kann gleichfalls rückgeführt werden, so daß keinerlei Umweltbelastung auftritt. Es müssen lediglich von Zeit zu Zeit geringe Säureverluste ausgeglichen werden.

Für Schrott aus verschiedensten Zink-Kohle-Manganoxidbatterien wurde folgende Durchschnittsanalyse erstellt:

|     | % Masse |
| --- | --- |
| Zn  | 11 bis 18 |
| C   | 5 bis 10 |
| Mn  | 13 bis 16 |
| Fe  | bis 28 (aus Stahlmantelbatterien) |
| Hg  | bis 3 |
| Cu  | bis 1 |
| Al  | bis 0,8 |
| Sn  | Spuren (aus Weißblech der Stahlmantelbatterien) |

Wird von Schrott mit 13 % Mn und 19 % Fe ausgegangen, können pro t Einsatzmaterial etwa 320 kg FeMn 59 erhalten werden.

Setzt man Schrott mit 16 % Mn und 1 % Fe ein, fallen 170 kg FeMn 94 pro t Einsatzmaterial an.

Weiters können aus 1 t Altbatterien im Schnitt etwa 170 kg Zink rückgewonnen werden.

Patentansprüche:

1. Verfahren zur Rückgewinnung von Zink und Mangan aus Zink- und Manganoxide enthaltendem Schrott von entladenen Zink-Kohle-Manganoxidbatterien, wobei der Batterieschrott gemeinsam mit kohlenstoffhältigem Material erhitzt wird, dadurch gekennzeichnet, daß der Schrott - gegebenenfalls nach vorheriger Auslaugung - mit festen kohlenstoffhältigen Reduktionsmitteln und Eisenträgern als Zuschlagstoffen in einem Reduktionsgefäß eingeschmolzen wird, die in den dabei entstehenden Reaktionsgasen enthaltenen Zink-Verbindungen und/oder metallisches Zink sowie gegebenenfalls Ammoniumchlorid unter Abkühlung der Gase gesammelt werden und Mangan als zinkfreies Ferromangan gewonnen wird.

2. Verfahren nach Anspruch 1, dadurch gekennzeichnet, daß der Schrott mit einem schwach sauren wässerigen Medium eines pH-Wertes von 4 bis 5,5 - vorteilhaft bei einem pH-Wert von etwa 5,4 - ausgelaugt wird, um Ammoniumchlorid und Zinkchlorid zu lösen, worauf die Laugungslösung vom verbleibenden, Manganoxide und metallisches Zink enthaltenden Rückstand abgetrennt und zur Abscheidung des Zinks elektrolysiert wird.

3. Verfahren nach Anspruch 1, dadurch gekennzeichnet, daß der Schrott mit einem alkalischen Medium eines pH-Wertes zwischen 7,8 und 9 - vorzugsweise unter Einhaltung eines pH-Wertes von etwa 8 - ausgelaugt wird, um Elektrolytsalze, wie Ammoniumchlorid, zu entfernen, worauf die Lösung vom Schlamm, der Zinkhydroxid und Manganoxide enthält, abgetrennt, der Schlamm getrocknet und reduzierend eingeschmolzen wird.

4. Verfahren nach Anspruch 1, dadurch gekennzeichnet, daß der Schrott mit den Zuschlagstoffen direkt reduzierend eingeschmolzen wird und das gemeinsam mit dem metallischen Zink und/oder den Zinkverbindungen gesammelte Ammoniumchlorid aus diesem Gemisch absublimiert wird.

5. Verfahren nach einem oder mehreren der Ansprüche 1 bis 4, dadurch gekennzeichnet, daß das gesammelte metallische Zink und/oder die Zinkverbindungen in saurem Milieu aufgelöst werden und das Zink aus der Lösung elektrolytisch abgeschieden wird.

6. Verfahren nach einem oder mehreren der Ansprüche 1 bis 5, dadurch gekennzeichnet, daß wenigstens ein Teil der nach Auflösung des gesammelten Zinks bzw. der Zinkverbindungen in saurem Milieu und nach Elektrolyse dieser Lösung verbleibenden sauren zinkarmen Flüssigkeit wieder zur Auflösung des metallischen Zinks und/oder der Zinkverbindungen rückgeführt wird.

7. Verfahren nach einem oder mehreren der Ansprüche 1 bis 6, dadurch gekennzeichnet, daß der Schrott vor der Laugung bzw. vor dem reduzierenden Einschmelzen zur Entfernung gegebenenfalls darin enthaltenen Quecksilbers auf Temperaturen bis 600$^{\circ}$ C erhitzt wird.

Altbatterien

↓

Zerkleinerung

↓

Erhitzen ──→ metallisches Hg

↓

Auslaugung
schwach sauer
─ oder ─
schwach alkalisch

Auskristalli=
sation von
$NH_4Cl$

$NH_4Cl$-hältige
Lösung (+Zn Spuren)

fest-flüssig | saure Lösung ──→ Elektrolyse ──→ Zink
Trennung | alkalische Lösung

$NH_4Cl$-hältig

Auskristallisation
von $NH_4Cl$

↓

Trocknung

↓

Brikettierung

↓

Eisenträger,
kohlenstoffhältige
Reduktionsmittel ──→ Reduktion ──→ Gasentstaubung
Kondensation

↓                              ↓

Ferromangan              Sublimation ──→ $NH_4Cl$

↓

Lösung von Zn
und Zinkverbindungen
in saurem Milieu

↓

saure, zinkarme
Flüssigkeit

Elektrolyse

↓

Zink